# EUROPEAN PATENT APPLICATION

(11) **EP 4 741 697 A1**
(43) Date of publication of application: **13.05.2026**
(21) Application number: 24211648.1
(22) Date of filing: 08.11.2024
(51) Int. Cl.: F16L 55/10, F16L 41/08

(54) **DRAIN PLUG WITH CURVED BASE**

(71) Applicant: Favuseal AS, 1351 Rud (NO)
(72) Inventor: Schlytter-Henrichsen, Christian, 1388 Borgen (NO)
(74) Representative: Plougmann Vingtoft a/s

(57) **Abstract**

The invention relates to a drain plug (1) for draining water or moisture via a draining hole (4) from an inner region of an associated insulation system (3) having a curved outer surface (2) at a location where the draining is to take place. The draining plug comprises a tubular neck (5) with a through-going opening (11) and a liner of sealing material (12) arranged on an inner surface (13) of the opening. The sealing material expands upon exposure to temperatures above a threshold temperature and thereby closes the opening. The drain plug further comprises a base (5) located at an end (14) of the neck and extending laterally outwards from an outer surface (15) of the neck. The base has a curved mounting surface (16) facing away from the neck. In some embodiments of the invention, the base is single-curved.

## Description

### FIELD OF THE INVENTION

The present invention relates to a drain plug for draining water or moisture from an inner region of an associated insulation system having a curved outer surface at a location where the draining is to take place.

### BACKGROUND OF THE INVENTION

The invention has been developed for use in relation to pipes which are covered with an insulation system comprising an insulation surrounded by a metal cladding in order to provide at least fire protection to the pipes. When the pipes are made from steel, water or moisture ingress in the insulation system can lead to Corrosion Under Insulation (CUI) of the steel pipes, flanges, valves and other critical equipment arranged within the insulation. To avoid this, drain plugs are typically arranged spaced apart along the length of the pipes for draining water or moisture via a draining hole from an inner region of the insulation system. Such a drain plug may e.g. be in the form of a tubular neck with a base extending outwards from an outer surface of the neck. The base is used for mounting the drain plug e.g. by use of pop rivets so that the mounting can take place from the outside of the metal cladding only. Known drain plugs have a flat mounting surface which can be difficult to mount on a curved surface having a small radius of curvature. At least for some sizes, it is necessary to deform the base with pliers and hammers to enable the mounting. This is time consuming and may cause damage to the integrity of the drain plug.

### OBJECT OF THE INVENTION

It is an object of the present invention to provide a drain plug which is easy to mount on a curved surface having small radius of curvature.

It is another object of the present invention to provide a drain plug which is easier to mount on a curved surface having so small a radius of curvature that the use of a known drain plug would require bending of the base by use of e.g. pliers and hammers during mounting.

It is a further object of the present invention to provide an alternative to the prior art.

In particular, it may be seen as an object of the present invention to provide a drain plug that solves the above-mentioned problems of the prior art.

### SUMMARY OF THE INVENTION

The above-described object and several other objects are intended to be obtained in a first aspect of the invention by providing a drain plug for draining water or moisture via a draining hole from an inner region of an associated insulation system having a curved outer surface at a location where the draining is to take place, the draining plug comprising:
- a tubular neck with:
   - a through-going opening, and
   - a liner of sealing material arranged on an inner surface of the opening, which sealing material expands upon exposure to temperatures above a threshold temperature and thereby closes the opening,
- a base located at an end of the neck and extending laterally outwards from an outer surface of the neck,
wherein the base has a curved mounting surface facing away from the neck and configured for fastening to the outer surface during use.

The tubular neck will typically have a circular cross-section, but it may also have other shapes, such as rectangular or elliptical.

The liner of sealing material provides fire protection by covering the opening in the neck with expanded material so that the excessive heat from a fire is prevented from or delayed in reaching whatever is covered by the insulation system. This function is known on its own from known drain plugs. By using known designs of the neck part of the drain plug, previously performed fire tests and certification can be reused for the drain plugs according to the present invention. Such known drain plugs have typically been tested in accordance with EN1363-2 (HCF/Pool), OTI 95 634 (Jetfire), ISO-22899-1 (Jetfire) and ISO-22899-1 High Heat Flux Jetfire.

The base of the drain plug typically extends around the whole circumference of the neck as will be shown in the figures. However, the scope of protection also covers drain plugs with a base extending from only a part of the outer surface of the neck if desired e.g. in relation to special space requirements for the mounting.

In some embodiments of the invention, the mounting surface of the base is single-curved so that it is configured for fastening on a single-curved outer surface of an associated insulation system during use. Such a geometry is e.g. relevant in relation to pipes.

In some embodiments of the invention, a radius of curvature of the mounting surface is 50-100 mm, such as 70-80 mm, such as 75 mm. The radius of curvature of the mounting surface does not need to match exactly with that of the outer surface of the insulation system. Typically, a given drain plug can be used for a range of outer surfaces as will be shown in the figures.

The base may have a constant or substantially constant thickness. Hereby reference is made to a direction normal to the mounting surface. By "substantially" is meant that the thickness may vary slightly due to typical tolerances of the manufacturing process used for making the drain plug. However, the scope of protection also covers embodiments where the thickness varies significantly, such as wherein the mounting surface is curved, and the opposite surface is plane.

In some embodiments of the invention, a length of the neck is larger than an outer cross-sectional dimension of the neck, such as an outer diameter of the neck. The length of the neck is determined during the design process, and typically also verified in fire tests, to be long enough to sufficiently delay the heat transfer from the fire towards the object, such as the pipe, protected by the insulation system. As an example of possible dimensions, the neck may have a length of 27 mm and an outer diameter of 21 mm. The base plate may have a diameter of 40 mm. However, other dimensions are also possible e.g. depending on the insulation system to be protected.

The neck and the base may be made as a unitary component, such as cast as one unit. Hereby a component with a low risk of built-in defects, such as potential crack initiation points, can be obtained. However, the scope of protection also covers drain plugs made from separately manufactured neck and base components that are assembled e.g. by welding or adhesion.

The neck and base may made from metal, such as stainless steel, such as AISI 316 SS steel.

The sealing material may be a graphite-based intumescent that expands at least 1000%, such as at least 2000%, such as at least 4000%, such as at least 5000%, when exposed to temperatures of above 200 degrees Celsius. The material may also be referred to as a silicone-filled intumescent. The 200 degrees Celsius is an example of a threshold temperature for this sealing material. For other types of sealing material, the threshold temperature may be different. For some embodiments of the invention, the intumescent expands between 1000 and 5000% when exposed to temperatures of above 200 degrees Celsius. By using a material with such a large expansion, the opening can be fully covered by an originally (i.e. before expansion) thin layer of sealing material. Such a sealing material expands so quickly that it can provide a closing of the opening within a few seconds and thereby prevent, or at least delay, flames or heat caused by a fire from reaching the protected object. Due to the functioning of the sealing material, the drain plug is sometimes referred to as a self-locking or self-closing drain plug.

In some embodiments of the invention, the base is provided with a plurality of circumferentially arranged through-going mounting holes for receiving fasteners, such as pop rivets, when the drain plug is fastened to the associated insulation system during use. The use of pop rivets means that the mounting of the drain plugs can be performed from the outside of the insulation system. When the insulation system comprises a metal cladding surrounding heat and fire protective insulation, such pop rivets can be fastened directly to that metal cladding. Other types of known drain plugs use a threaded tube with a nut and a washer where the nut and washer are to be arranged on the inside of the metal cladding. This is not as efficient as a drain plug according to the present invention, because it is not possible to drain all of the water ingress out. Furthermore, the use of pop rivets means that no adjustment of the drain plug itself is required with respect to the thickness of the part of the associated insulation system to which it is to be mounted, such as a metal cladding.

The first aspect of the present invention will be apparent from and elucidated with reference to the embodiments described hereinafter.

### BRIEF DESCRIPTION OF THE FIGURES

The drain plug according to the invention will now be described in more detail with regard to the accompanying figures. The figures show one way of implementing the present invention and is not to be construed as being limiting to other possible embodiments falling within the scope of the attached claim set.
Figures 1.a-1.c schematically show cross-sectional views of a known drain plug mounted to the outer surface of insulation systems.
Figures 2.a and 2.b schematically show a cross-sectional view and a bottom view, respectively, of a drain plug according to the present invention.
Figure 3 shows an alternative embodiment, wherein the mounting surface is curved, and the opposite surface is flat.
Figure 4 schematically shows how one size of drain plugs according to the present invention can be used for different sizes of the outer surface of installation systems.
Figure 5 schematically shows an embodiment of the invention in which the mounting surface of the base is single-curved.

### DETAILED DESCRIPTION OF AN EMBODIMENT

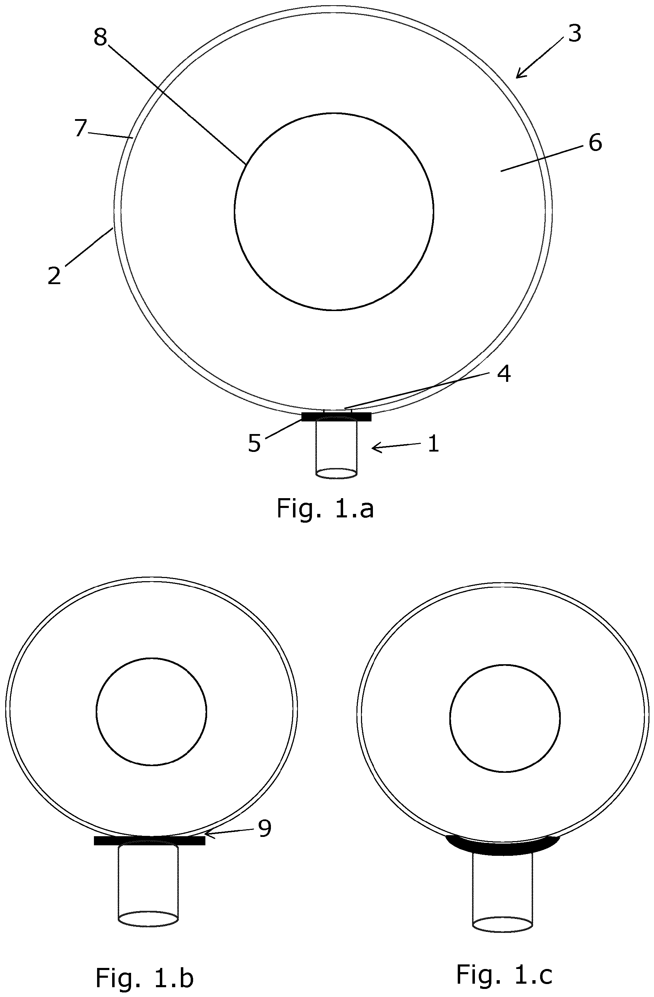

Figures 1.a-1.c schematically show cross-sectional views of a known drain plug 1 mounted to the outer surface 2 of an insulation system 3. The drain plug 1 is used for draining water or moisture via a draining hole 4 from an inner region of the insulation system 3 as described above. The known drain plug 1 shown in figures 1.a-1.c differs from a drain plug 1 according to the present invention in that it has a flat base 5. In these figures, the insulation system 3 is an insultation layer 6 and a metal cladding 7 arranged around a pipe 8 to be protected. In figure 1.a, the metal cladding 7 comprising the outer surface 2 is significantly larger than the drain plug 1, and the base plate 5 can easily be fastened thereto e.g. by use of pop rivets (not shown). However, when the pipe 8 and thereby also the metal cladding 7 is much smaller, the smaller radius of curvature of the metal cladding 7 results in a gap 9 between the outer surface 2 and the base plate 5 as shown schematically in figure 1.b. This means that in order to be able to mount the drain plug 1, the base plate 5 must be bent in order to fit towards the metal cladding 7 as shown in figure 1.c. The necessary deformation is typically obtained by use of pliers and hammers which complicates the mounting process and includes a risk of damaging the drain plug 1.

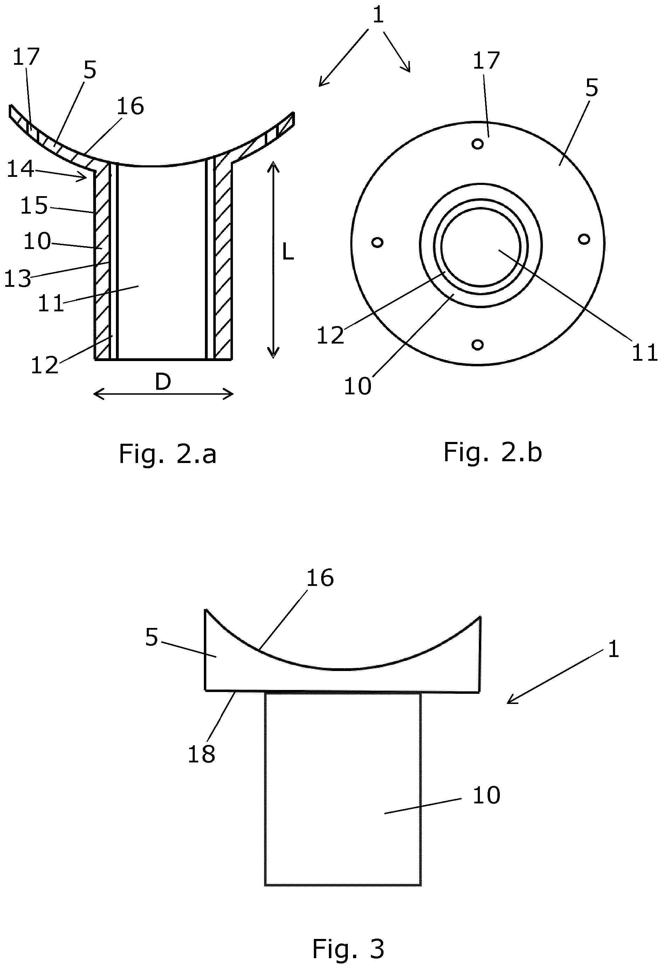

Figures 2.a and 2.b schematically show a cross-sectional view and a bottom view, respectively, of a drain plug 1 according to the present invention. The drain plug 1 has a tubular neck 10 with a through-going opening 11 and a liner 12 of sealing material arranged on an inner surface 13 of the opening 11. The sealing material 12 expands upon exposure to temperatures above a threshold temperature and thereby closes the opening 11 in order to provide fire protection as described above. The drain plug 1 comprises a base 5 located at an end 14 of the neck 10 and extending laterally outwards from an outer surface 15 of the neck 10. The base 5 has a curved mounting surface 16 facing away from the neck 10 and configured for fastening to the curved outer surface 2 of the insulation system 3 at a location where the draining is to take place. In this embodiment of the invention, a length of the neck 10 is larger than an outer diameter of the neck 10. The illustrated base 5 is provided with four circumferentially arranged through-going mounting holes 17 for receiving fasteners (not shown), such as pop rivets, when the drain plug 1 is fastened to the insulation system 3 during use.

Drain plugs 1 are preferably mounted to a metal cladding 7 of an insulation system 3 as part of the installation procedure. Draining holes 4 are drilled in the metal cladding 7 at predetermined intervals. When the draining plugs 1 are to be mounted with pop rivets, the corresponding mounting holes (not shown) are drilled in the metal cladding 7 around each draining hole 4. All these holes are preferably drilled in the metal cladding 7 before installing the metal cladding 7 in order to prevent any surface damages on the pipe 8 to be protected.

In the embodiment shown in figures 2.a and 2.b, the base 5 has a constant thickness. Figure 3 shows an alternative embodiment, wherein the mounting surface 16 is curved, and the opposite surface 18 is flat resulting in a thickness that varies over the extension of the base 5. The neck 10 and the base 5 are preferably made as a unitary component, such as cast as one unit. However, they may also be made from two parts that are assembled.

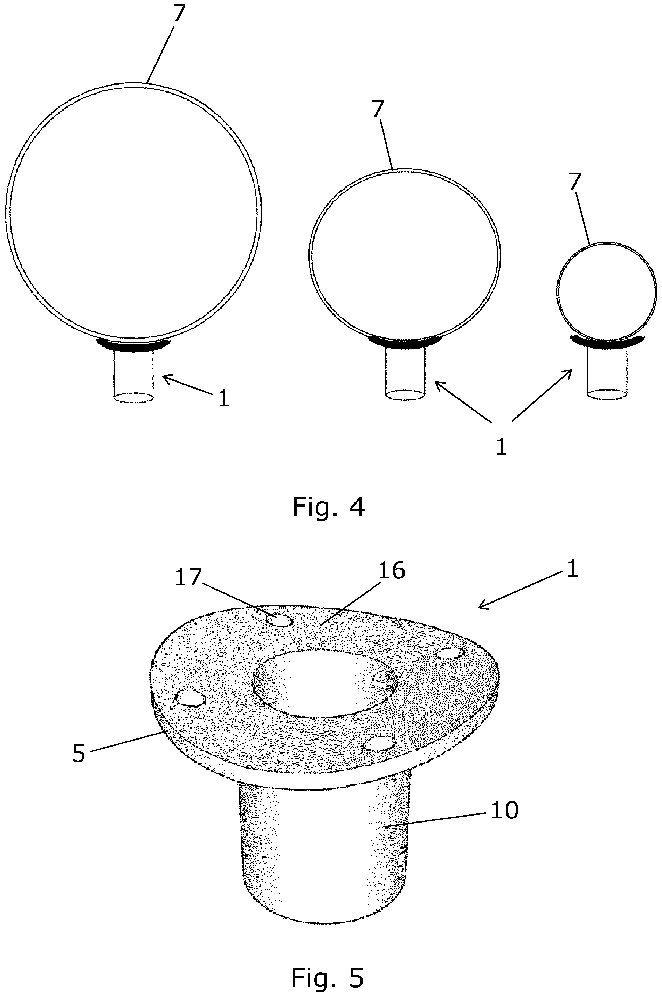

Figure 4 schematically shows how one size of drain plugs 1 according to the present invention can be used for different sizes of the outer surface of installation systems which are illustrated by the metal claddings 7. Even though the radius of curvature of the mounting surface 16 only completely matches an outer surface 2 of the insulation system 3 having the same radius of curvature, the drain plug 1 can still be mounted on both smaller and larger insultation systems 3 as seen in figure 4. If a correct match is desired, it will also be possible to determine the shape and size of the base plate accordingly beforehand.

Figure 5 schematically shows an embodiment of the invention in which the mounting surface 16 of the base 5 is single-curved and configured for mounting on a single-curved outer surface 2 of the insulation system 3. In the illustrated embodiment, the base has a circular shape, but it may also be rectangular or rectangular with rounded corners.

Although the present invention has been described in connection with the specified embodiments, it should not be construed as being in any way limited to the presented examples. The scope of the present invention is set out by the accompanying claim set. In the context of the claims, the terms "comprising" or "comprises" do not exclude other possible elements or steps. Also, the mentioning of references such as "a" or "an" etc. should not be construed as excluding a plurality. The use of reference signs in the claims with respect to elements indicated in the figures shall also not be construed as limiting the scope of the invention. Furthermore, individual features mentioned in different claims, may possibly be advantageously combined, and the mentioning of these features in different claims does not exclude that a combination of features is not possible and advantageous.

## Claims

1. Drain plug (1) for draining water or moisture via a draining hole (4) from an inner region of an associated insulation system (3) having a curved outer surface (2) at a location where the draining is to take place, the draining plug (1) comprising:
- a tubular neck (10) with:
- a through-going opening (11), and
- a liner of sealing material (12) arranged on an inner surface (13) of the opening (11), which sealing material (12) expands upon exposure to temperatures above a threshold temperature and thereby closes the opening (11),
- a base (5) located at an end (14) of the neck (10) and extending laterally outwards from an outer surface (15) of the neck (10),
wherein the base (5) has a curved mounting surface (16) facing away from the neck (10) and configured for fastening to the outer surface (2) during use.

2. Drain plug (1) according to claim 1, wherein the mounting surface (16) of the base (5) is single-curved so that it is configured for fastening on a single-curved outer surface (2) of an associated insulation system (3) during use.

3. Drain plug (1) according to claim 1 or 2, wherein a radius of curvature of the mounting surface (16) is 50-100 mm, such as 70-80 mm, such as 75 mm.

4. Draining plug (1) according to any of the preceding claims, wherein the base (5) has a constant or substantially constant thickness.

5. Drain plug (1) according to any of the preceding claims, wherein a length (L) of the neck (10) is larger than an outer cross-sectional dimension (D) of the neck (10), such as an outer diameter of the neck.

6. Drain plug (1) according to any of the preceding claims, wherein the neck (10) and the base (5) are made as a unitary component, such as cast as one unit.

7. Drain plug (1) according to any of the preceding claims, wherein the neck (10) and base (5) are made from metal, such as stainless steel, such as AISI 316 SS steel.

8. Drain plug (1) according to any of the preceding claims, wherein the sealing material (12) is a graphite-based intumescent that expands at least 1000%, such as at least 2000%, such as at least 4000%, such as at least 5000%, when exposed to temperatures of above 200 degrees Celsius.

9. Drain plug (1) according to any of the preceding claims, wherein the base (5) is provided with a plurality of circumferentially arranged through-going mounting holes (17) for receiving fasteners, such as pop rivets, when the drain plug (1) is fastened to the associated insulation system (3) during use.
